# EUROPÄISCHE PATENTSCHRIFT

(11) **EP 2 178 715 B1**
(45) Veröffentlichungstag und Bekanntmachung des Hinweises auf die Patenterteilung: **22.06.2016**
(21) Anmeldenummer: 08773604.7
(22) Anmeldetag: 24.06.2008
(51) Int. Cl.: B60N 2/68, B22F 7/00, B29C 44/12

(54) **STRUKTUR FÜR FAHRZEUGSITZ**
STRUCTURE FOR A VEHICLE SEAT
STRUCTURE POUR SIÈGE DE VÉHICULE

(30) Priorität: 18.07.2007 DE 102007033775; 09.11.2007 DE 102007053962
(43) Veröffentlichungstag der Anmeldung: 28.04.2010
(73) Patentinhaber: Johnson Controls GmbH, 51399 Burscheid (DE)
(72) Erfinder: FUNK, Stefan, 42799 Leichlingen (DE); ZYNDA, Martin, 51399 Burscheid (DE); JOSTEN, Stefan, 41569 Rommerskirchen (DE); ENGELS, Bernd, 42897 Remscheid (DE); HANSEN, Andreas, 71111 Waldenbuch (DE)
(74) Vertreter: Schwöbel, Thilo K.
(86) Internationale Anmeldenummer: PCT/EP2008/005092
(87) Internationale Veröffentlichungsnummer: WO 2009/010158

(56) Entgegenhaltungen:
- WO-A-01/89875
- WO-A-99/19164
- WO-A-2005/002950
- DE-A1- 10 142 981
- DE-A1- 10 321 289
- DE-U1- 29 812 841
- JP-A- 1 069 309

## Beschreibung

Die Erfindung betrifft einen Fahrzeugsitz nach dem Oberbegriff des Anspruchs 1. Solche Fahrzeugsitze sind allgemein bekannt. Beispielsweise ist aus der deutschen Offenlegungsschrift DE 10 2004 039 366 A1 eine Rückenlehne für einen Kraftfahrzeugsitz mit einer Versteifungsstruktur bekannt. Ferner ist aus dem deutschen Gebrauchsmuster DE 298 12 841 U1 ein verstärktes Strukturelement bekannt.

Aus der WO 99/19164 A1 ist ein weiterer verstärkter Fahrzeugsitz mit einer Schaumfüllung im Strukturhohlraum, entsprechend dem Oberbegriff des Anspruchs 1, bekannt. Bei den bekannten Fahrzeugsitzen ist es nachteilig, dass Aspekte der Montagefreundlichkeit bzw. Einfachheit der Montage unzureichend berücksichtigt werden, was zu kostenmäßigen Nachteilen bei der Herstellung führt.
Die Aufgabe der vorliegenden Erfindung ist die gezielte Ausbildung bzw. Einbringung eines Einlegers in einen Hohlraum eines Strukturelements eines Fahrzeugsitzes und dessen montagefreundliche Befestigung.

Die Aufgabe wird durch Merkmale im kennzeichnenden Teil des Anspruchs 1 gelöst.
Hierdurch ist es vorteilhaft möglich, dass eine leichte Montierbarkeit des Fahrzeugsitzes bzw. der Rückenlehne oder des Sitzteils des Fahrzeugsitzes erzielt wird, der Einleger im wesentlichen lediglich gegenüber dem Strukturelement positioniert werden muss und anschließend die expandierende Füllung zu einer dauerhaften Fixierung des Einlegers gegenüber dem Strukturelement führt. Hierbei ist der Einleger zumindest gegenüber einer Bewegungsart formschlüssig mit dem Strukturelement verbunden, d.h. beispielsweise liegt der Einleger derart auf einem Teil der Innenwand des Hohlraums auf, dass bedingt durch Oberflächenstrukturen wie Sicken, Rippen oder dergleichen eine eindeutige Positionierung des Einlegers relativ zum Strukturelement durch einfaches Einlegen des Einlegers in den Hohlraum gewährleistet ist. Im anschließenden Verfahrensschritt der Expansion der Füllung wird dann der Einleger in der nach dem Einlegen eingenommenen Position gegenüber dem Strukturelement durch stoffschlüssige Verbindung mit der Füllung fixiert.

Weiterhin ist der Einleger stoffschlüssig höchstens mit der Füllung verbunden ist bzw. jedenfalls nicht mit dem Strukturelement verschweißt vorgesehen. Hierdurch entfällt in vorteilhafter Weise der zur Befestigung des Einlegers bisher üblicherweise notwendige Montageschritt des Verschweißens des Einlegers mit dem Strukturelement.

Weiterhin ist zumindest teilweise zwischen dem Einleger und dem Strukturelement die Füllung vorgesehen ist. Hierdurch wird eine besonders gute Befestigung des Einlegers in dem Montageelement realisiert, wobei durch eine solche Anordnung der Füllung zwischen dem Einleger und dem Strukturelement (bzw. der Wand des Hohlraums) auch zu einer Versteifung des Strukturelementes führt, so dass die Stabilitätsanforderungen für ein solches Strukturelement auch mit einer reduzierten Materialstärke und damit einem geringeren Gewicht und geringeren Materialkosten erfüllt werden können.

Weiterhin weist die Füllung einen Schaumträger und ein Schaummaterial auf, das den Schaumträger zumindest teilweise umgibt, wobei das Schaummaterial den Schaumträger bevorzugt vollständig umgibt. Hierdurch kann in besonders vorteilhafter Weise eine stabile Anbindung des Einlegers mit dem Strukturelement realisiert werden.

Weiterhin ist bevorzugt, dass ein Teil des Einlegers durch eine Öffnung im Strukturelement aus dem Hohlraum herausragt. Hierdurch kann in vorteilhafter Weise beispielsweise die Anbringung des Seitenlagers und/oder des Mittellagers einer Rückenlehne in einfacher Weise realisiert werden.

Das Schaummaterial ist zur Expansion in einem Elektro-Tauchlackierungsofen vorgesehen ist. Hierdurch kann mittels eines Arbeitsgangs, der ohnehin durchgeführt wird, eine schnelle und montagetechnisch einfache Integration der Schaumverstärkung des

### Fahrzeugsitzes erfolgen.

Ein weiterer Gegenstand der vorliegenden Erfindung ist ein Verfahren zur Herstellung eines erfindungsgemäßen Fahrzeugsitzes wobei in einem ersten Schritt die noch unexpandierte und den Schaumträger und das Schaummaterial aufweisende Füllung relativ zu einem Teil des Strukturelements positioniert und/oder befestigt wird, dass in einem zweiten Schritt der Hohlraum gebildet wird und dass in einem dritten Schritt eine Elektro-Tauchlackierung durchgeführt wird, während der das Schaummaterial expandiert.

### Figurenbeschreibung

Die Figuren stellen beispielhaft und schematisch Ausführungen der Erfindung dar.
**Figur 1** zeigt schematisch als Beispiel eines Strukturelements eine Lehnenstruktur bzw. ein Lehnensegment einer beispielsweise geteilt umklappbaren Rückenlehne
**Figuren 2 und 3** zeigen schematische Darstellungen eines erfindungsgemäßen Fahrzeugsitzes.

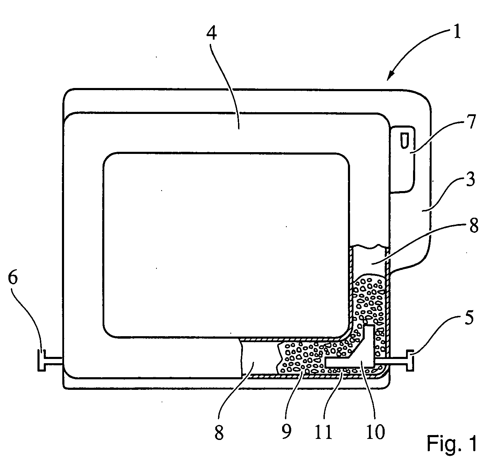

In der Figur 1 ist beispielhaft und schematisch als Beispiel eines Strukturelements eines Fahrzeugsitzes die rückwärtige Ansicht eines Lehnensegments 1 einer Rückenlehne dargestellt. Die das Lehnensegment 1 bzw. die Lehnenstruktur 1 (im Bild ist nur ein Lehnensegment 1 einer beispielsweise geteilt umklappbaren Rückenlehne abgebildet) umfasst eine Basisplatte 3 und ein darauf aufgesetztes, ein umlaufendes U-Profil bildendes Pressteil 4, so dass insbesondere eine umlaufende Hohlkammer ausgebildet wird. Alternativ zu einer Basisplatte 3 und einem Pressteil 4 könnte das Lehnensegment 1 oder die Lehnenstruktur 1 auch die Basisplatte 3 und vier darauf aufgesetzte, U-förmige Profile (nicht dargestellt) aufweisen, welche mit der Basisplatte 3 und vorzugsweise aufgesetzten Eckpressstücken einen rechteckigen Rahmen ausbilden.

Die Basisplatte 3 und das Pressteil 4 bestehen im wesentlichen beispielsweise aus Metall, insbesondere Stahl- oder Aluminiumblech, oder im wesentlichen aus Kunststoff, beispielsweise aus glasfaserverstärktem Kunststoff. Dabei können auch verschiedene Werkstoffe miteinander gepaart werden.

Über ein Seitenlager 5 und ein Mittellager 6 sind die Lehnensegmente 1 unabhängig voneinander drehbar im Fahrzeug gelagert. Seitlich am oberen Seitenbereich der Lehnenstruktur 1 angeordnete Drehfallenschlösser 7 dienen der Verriegelung der Lehnensegmente 1 in aufrechter Gebrauchsstellung an der Fahrzeugkarosserie, insbesondere an der C-Säule.

Basisplatte 3 und Pressteil 4 bilden miteinander eine rahmenartig umlaufende Hohlkammer 8 aus. Erfindungsgemäß ist vorgesehen, dass von außen in die Hohlkammer 8 hineinragende Ausstattungsteile der Rückenlehne, beispielsweise das Seitenlager 5 und/oder das Mittellager 6, zumindest indirekt über eine in die Hohlkammer 8 eingebrachte Schaumstruktur 9 in der Hohlkammer 8 verankert sind. Vorzugsweise ist in der Hohlkammer 8 ein mit dem Ausstattungsteil 9 verbundener Einleger 10 aus Metall oder Kunststoff vorgesehen, der gegenüber Basisplatte 3 und/oder Pressteil 4 beabstandet ist, wobei der betreffende Spalt 11 mit der den Einleger einbettenden Schaumstruktur 9 gefüllt ist.

Das Einbringen der Schaumstruktur 9 kann durch Einlegen eines der Hohlkammer 8 und dem Einleger 10 entsprechend geformten Schaumfertigteils vor oder während des Verschweißens von Basisplatte 3 und Pressteil 4 erfolgen. Alternativ wird die Schaumstruktur 9 erst im Anschluss an das Verschweißen durch Injizieren einer schäumfähigen Masse in die Hohlkammer 8 eingebracht. Besonders bevorzugt ist jedoch das Einsetzen eines eine Raumform aufweisenden, insbesondere strangartigen Schaumvorprodukts in die Hohlkammer 8, welches vor, während oder nach dem Verschweißen in die Hohlkammer 8 eingelegt wird und nach einer Aktivierung zu der Schaumstruktur 9 aufschäumt. Die Aktivierung kann beispielsweise durch Wärmezufuhr beim Lackieren der Lehnenstruktur 1 erfolgen. Hierzu werden vorzugsweise steif vernetzende Schaumsysteme, z. B. auf Epoxidbasis, verwendet.

Die Lehnenstruktur 1 wird hierdurch in unfallbedingt hochbelasteten Bereich erheblich versteift. Ferner wird die Belastbarkeit der betreffenden Ausstattungsteile erhöht.

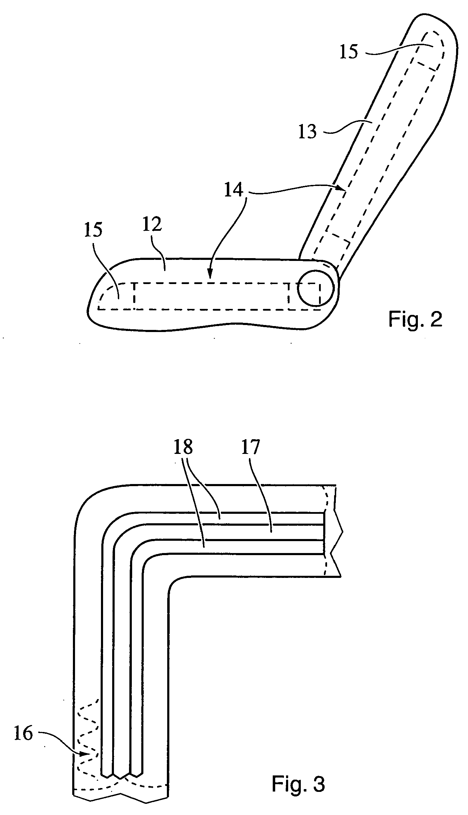

In den Figuren 2 und 3 ist ein erfindungsgemäßer Fahrzeugsitz dargestellt. Ein solcher Fahrzeugsitz umfasst ein Sitzteil 12 und eine Rückenlehne 13. Sowohl das Sitzteil 12 als auch die Rückenlehne 13 weisen jeweils wenigstens ein Strukturelement 14 auf, das im Rahmen der vorliegenden Erfindung insbesondere durch die Basisplatte 3 und das darauf aufgesetzte, ein umlaufendes U-Profil bildendes Pressteil 4 ausgestaltet ist. In diesem Strukturelement 14 ist zumindest in Teilbereichen ein Hohlraum 15 vorgesehen, der im Rahmen der vorliegenden Erfindung auch als Hohlkammer 8 bezeichnet wird. Der Hohlraum 15 ist beispielsweise rahmenartig im wesentlichen der äußeren Form bzw. dem Umfang der Rückenlehne 13 oder des Sitzteils 12 folgend ausgebildet und im Querschnitt im wesentlichen eckig, rechteckig, dreieckig oder abgewinkelt ausgebildet. In dem Hohlraum 15 ist gemäß der vorliegenden Erfindung in zumindest einem Teilbereich des Hohlraums 15 und bevorzugt auch lediglich in einem Teilbereich des Hohlraums 15 eine Füllung 16 sowie der Einleger 10 (in Figur 2 und 3 der Einfachheit halber nicht dargestellt) angeordnet, wobei die Füllung 16 ein Schaummaterial 18 umfasst. Die Füllung 16 bzw. das Schaummaterial 18 wird im Rahmen der vorliegenden Erfindung auch als Schaumstruktur 9 bezeichnet. Die Füllung 16 bzw. das Schaummaterial 18 kann zwar durch Injektion eines leichtverformbaren bzw. sich aufschäumenden Materials von außen (beispielsweise durch eine in dem Hohlraum 15 befindliche Öffnung) eingespritzt werden, bevorzugt ist es jedoch gemäß der vorliegenden Erfindung, dass die Füllung 16 in Form eines mit einem Schaumträger 17 verbundenen noch unexpandierten und im wesentlichen harten jedenfalls im Wesentlichen nicht klebenden Schaummaterials 18 in den Hohlraum 15 eingebracht wird oder aber an einem eine Hohlraumwand bildenden Strukturteil befestigt oder positioniert wird, der Einleger 10 vor der Befestigung oder Positionierung der Füllung 16 oder nach der Befestigung oder Positionierung der Füllung 16 eingebracht wird, wobei der Hohlraum 15 dann durch Verbinden mit einem anderen Strukturteil gebildet wird. In einem nachfolgenden Schritt wird dann das Schaummaterial 18 expandiert, wodurch das Schaummaterial 18 den Schaumträger 17 zumindest teilweise umgibt bzw. bevorzugt vollständig umgibt. In Figur 3 ist zur Veranschaulichung dessen ein Ausschnitt aus einem in dem Strukturelement 14 ausgebildeten Hohlraum 15 dargestellt, wobei in dem Hohlraum 15 in durchgezogenen Linien die Füllung 16, d.h. den Schaumträger 17 und das Schaummaterial 18, in unexpandiertem Zustand des Schaummaterials 18 dargestellt ist und wobei gestrichelte Linien bzw. Punktierungen die Begrenzung des Schaummaterials 18 in aufgeschäumtem Zustand darstellen. Die Expansion des Schaummaterials 18 kann erfindungsgemäß insbesondere mittels einer KTL-Bad-Behandlung (nicht dargestellt) erfolgen. Hierunter wird eine Behandlung in einem Elektro-Tauchlackierungsofen bzw. eine Kathodische Tauchlackierung verstanden, bei der die Strukturelemente 14 des Fahrzeugsitzes auf eine Temperatur von beispielsweise etwa 160° bis etwa 180° während beispielsweise etwa 5 Minuten bis etwa 15 Minuten, bevorzugt ca. 10 Minuten, gebracht werden.

### Bezugszeichenliste

- 1: Lehnenstruktur, Lehnensegment
- 3: Basisplatte
- 4: Pressteil
- 5: Seitenlager
- 6: Mittellager
- 7: Drehfallenschloss
- 8: Hohlkammer
- 9: Schaumstruktur
- 10: Einleger
- 11: Spalt
- 12: Sitzteil
- 13: Rückenlehne
- 14: Strukturelement
- 15: Hohlraum
- 16: Füllung
- 17: Schaumträger
- 18: Schaummaterial

## Patentansprüche

1. Fahrzeugsitz mit einer Rückenlehne (13) und einem Sitzteil (12), wobei die Rückenlehne (13) oder das Sitzteil (12) wenigstens ein einen Hohlraum (15) aufweisendes Strukturelement (14) aufweist, wobei in wenigstens einem Teil des Hohlraums (15) eine eingebrachte Füllung (16) vorgesehen ist, **dadurch gekennzeichnet, dass** im Bereich der Füllung (16) ein Einleger (10) in dem Hohlraum (15) vorgesehen ist, wobei der Einleger (10) zumindest gegenüber einer Bewegungsart formschlüssig mit dem Strukturelement (14) verbunden ist und wobei der Einleger (10) stoffschlüssig höchstens mit der Füllung (16) verbunden ist,
wobei zumindest teilweise zwischen dem Einleger (10) und dem Strukturelement (14) die Füllung (16) vorgesehen ist, wobei die Füllung (16) einen Schaumträger (17) und ein expandiertes Schaummaterial (18) aufweist, welches den Schaumträger (17) zumindest teilweise umgibt.

2. Fahrzeugsitz nach Anspruch 1, **dadurch gekennzeichnet, dass** das Schaummaterial (18) den Schaumträger (17) vollständig umgibt.

3. Fahrzeugsitz nach einem der vorhergehenden Ansprüche, **dadurch gekennzeichnet, dass** ein Teil des Einlegers (10) durch eine Öffnung im Strukturelement (14) aus dem Hohlraum (15) herausragt.

4. Verfahren zur Herstellung eines Fahrzeugsitzes nach einem der Ansprüche 1 bis 3, **dadurch gekennzeichnet, dass** in einem ersten Schritt die noch unexpandierte und den Schaumträger (17) und das Schaummaterial (18) aufweisende Füllung (16) relativ zu einem Teil des Strukturelements (14) positioniert und/oder befestigt wird, dass in einem zweiten Schritt der Hohlraum (15) gebildet wird und dass in einem dritten Schritt eine Elektro-Tauchlackierung durchgeführt wird, während der das Schaummaterial (18) expandiert.

## Claims

1. Vehicle seat with a backrest (13) and a seat part (12), wherein the backrest (13) or the seat part (12) comprises at least one structural element (14) comprising a hollow cavity (15), wherein, in at least one part of the hollow cavity (15), an introduced filling (16) is provided, **characterised in that**, in the region of the filling (16), an inlay (10) is provided in the hollow cavity (15), wherein the inlay (10) is connected to the structural element (14) in a form-fit manner at least with reference to one movement type, and wherein the inlay (10) is connected in a substance-fit manner at most to the filling (16), wherein,
at least in part, the filling (16) is provided between the inlay (10) and the structural element (14), wherein the filling (16) comprises a foam carrier (17) and an expanded foam material (18), which at least partially surrounds the foam carrier (17).

2. Vehicle seat according to claim 1, **characterised in that** the foam material (18) completely surrounds the foam carrier (17).

3. Vehicle seat according to any one of the preceding claims, **characterised in that** a part of the inlay (10) projects out of the hollow cavity (15) through an opening in the structural element (14).

4. Method for manufacturing a vehicle seat according to any one of claims 1 to 3, **characterised in that**, in a first step, the filling (16), still unexpanded and comprising the foam carrier (17) and the foam material (18), is positioned and/or attached relative to a part of the structural element (14), that the hollow cavity (15) is formed in a second step and that an electro-dip coating is implemented in a third step, during which the foam material (18) expands.

## Revendications

1. Siège de véhicule muni d'un dossier (13) et d'une partie siège (12), où le dossier (13) ou la partie siège (12) comportent au moins un élément structurel (14) présentant une cavité (15), où un rembourrage (16) est prévu dans au moins une partie de la cavité (15), **caractérisé en ce qu'**une feuille intercalaire (10) est prévue dans la cavité (15) dans la zone du rembourrage (16), où la feuille intercalaire (10) est reliée à l'élément structurel (14) par engagement positif au moins par rapport au mode de déplacement et où la feuille intercalaire (10) est reliée au plus au rembourrage (16) par polymérisation,
où
le rembourrage (16) est prévu au moins partiellement entre la feuille intercalaire (10) et l'élément structurel (14), où le rembourrage (16) présente un support de mousse (17) et un matériau en mousse expansé (18), qui entoure le support de mousse (17) au moins partiellement.

2. Siège de véhicule selon la revendication 1, **caractérisé en ce que** le matériau en mousse (18) entoure le support de mousse (17) complètement.

3. Siège de véhicule selon l'une quelconque des revendications précédentes, **caractérisé en ce qu'**une partie de la feuille intercalaire (10) pénètre dans une ouverture de l'élément structurel (14) pour dépasser de la cavité (15).

4. Procédé de fabrication d'un siège de véhicule selon l'une quelconque des revendications 1 à 3, **caractérisé en ce que** dans un premier temps, le rembourrage (16) encore non expansé et présentant le support de mousse (17) et de la matériau en mousse (18) est positionné et/ou fixé par rapport à une partie de l'élément structurel (14), que la cavité (15) est constituée dans un deuxième temps et que dans un troisième temps, on procède à une enduction électrophorétique au trempé, pendant l'expansion du matériau en mousse (18).
